# EUROPEAN PATENT APPLICATION

(11) **EP 4 665 030 A1**
(43) Date of publication of application: **17.12.2025**
(21) Application number: 23920338.3
(22) Date of filing: 06.02.2023
(51) Int. Cl.: H04W 72/04

(54) **FEEDBACK METHOD, AND APPARATUS, DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2023/074670
(87) International publication number: WO 2024/164123

(57) **Abstract**

Provided in the present disclosure are a feedback method, and an apparatus, a device and a storage medium. The method comprises: determining configuration information, wherein the configuration information is used for configuring a processing method for a reference signal measurement result; measuring a reference signal, so as to obtain the reference signal measurement result; on the basis of the configuration information, processing the reference signal measurement result, so as to obtain a reference signal processing result; and feeding the reference signal processing result back to a positioning server. The feedback method provided in the present disclosure can be applied to an AI positioning process, so as to implement measurement feedback of a channel-based impact response and/or power distribution during the AI positioning process, thereby ensuring the stable execution of the AI positioning process.

## Description

### TECHNICAL FIELD

The present disclosure relates to the field of communication technologies, and in particular relates to a feedback method, an apparatus, a device and a storage medium.

### BACKGROUND

In a new radio (NR) system, the artificial intelligence (AI)-based positioning is introduced to improve the positioning accuracy. When the Al-based positioning is performed, a signal measurement node usually needs to measure a reference signal to obtain a measurement result, which may include, for example, a measurement result of a channel impulse response and/or a power distribution of a signal. Afterwards, the signal measurement node needs to feed back the measurement result to a positioning server, so that the positioning server may determine the required positioning location based on the measurement result.

However, there is currently no method for feeding back the measurement results (i.e., a channel impulse response and/or a power distribution of a signal) required in an AI positioning process.

### SUMMARY

Embodiments of the present disclosure provide a feedback method, an apparatus, a device and a storage medium.

In a first aspect, embodiments of the present disclosure provide a feedback method, including: determining configuration information, where the configuration information is used to configure a processing procedure for a reference signal measurement result; obtaining the reference signal measurement result by measuring a reference signal; obtaining a reference signal processing result by processing the reference signal measurement result based on the configuration information; and feeding back the reference signal processing result to a positioning server.

The present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

In a second aspect, embodiments of the present disclosure provide a feedback method, including: sending configuration information to a signal measurement node, where the configuration information is used to configure a processing procedure for a reference signal measurement result; and receiving a reference signal processing result fed back by the signal measurement node.

In a third aspect, embodiments of the present disclosure provide a communication device, which includes a processing module and a transceiver module. The processing module is configured to determine configuration information, where the configuration information is used to configure a processing procedure for a reference signal measurement result. The processing module is further configured to obtain the reference signal measurement result by measuring a reference signal, and obtain a reference signal processing result by processing the reference signal measurement result based on the configuration information. The transceiver module is configured to feed back the reference signal processing result to a positioning server.

In a fourth aspect, embodiments of the present disclosure provide a communication device, which includes a transceiver module configured to send configuration information to a signal measurement node, where the configuration information is used to configure a processing procedure for a reference signal measurement result. The transceiver module is further configured to receive a reference signal processing result fed back by the signal measurement node.

In a fifth aspect, embodiments of the present disclosure provide a communication device, which includes a processor. When the processor calls a computer program in a memory, the method described above in the first or second aspect is performed.

In a sixth aspect, embodiments of the present disclosure provide a communication device, which includes a processor and a memory having stored therein a computer program. The processor executes the computer program stored in the memory, so that the communication device performs the method described above in the first or second aspect.

In a seventh aspect, embodiments of the present disclosure provide a communication device, which includes a processor and an interface circuit configured to receive code instructions and transmit the code instructions to the processor. The processor is configured to run the code instructions to cause the communication device to perform the method described above in the first or second aspect.

In an eighth aspect, embodiments of the present disclosure provide a communication system. The communication system includes the communication device described in any one of the third or fourth aspect, or the communication system includes the communication device described in the fifth aspect, the communication device described in the sixth aspect, or the communication device described in the seventh aspect.

In a ninth aspect, embodiments of the present disclosure provide a computer-readable storage medium for storing instructions used by the above-mentioned network device that, when executed, cause the terminal to perform the method described above in the first or second aspect.

In a tenth aspect, embodiments of the present disclosure provide a computer program product including a computer program that, when run on a computer, causes the computer to perform the method described above in the first or second aspect.

In an eleventh aspect, the present disclosure provides a chip system, which includes at least one processor and an interface, configured to support a network device to implement the functions involved in the first or second aspect, for example, determining or processing at least one of data and information involved in the above method. In a possible design, the chip system further includes a memory, which is configured to store desired computer programs and data for source and secondary nodes. The chip system may be composed of a chip, or may include a chip and other discrete devices.

In a twelfth aspect, the present disclosure provides a computer program that, when run on a computer, causes the computer to perform the method described above in the first or second aspect.

### BRIEF DESCRIPTION OF THE DRAWINGS

These and/or other aspects and advantages of the present disclosure will become apparent and more readily appreciated from the following descriptions of embodiments made with reference to the drawings.
FIG. 1 is a schematic diagram of an architecture of a communication system provided in an embodiment of the present disclosure.
FIG. 2 is a schematic flowchart of a feedback method provided in an embodiment of the present disclosure.
FIG. 3 is a schematic flowchart of a feedback method provided in another embodiment of the present disclosure.
FIG. 4 is a schematic flowchart of a feedback method provided in yet another embodiment of the present disclosure.
FIG. 5 is a schematic flowchart of a feedback method provided in yet another embodiment of the present disclosure.
FIG. 6 is a schematic flowchart of a feedback method provided in still another embodiment of the present disclosure.
FIG. 7 is a schematic flowchart of a feedback method provided in still another embodiment of the present disclosure.
FIG. 8 is a schematic flowchart of a feedback method provided in still another embodiment of the present disclosure.
FIG. 9 is a schematic flowchart of a feedback method provided in still another embodiment of the present disclosure.
FIG. 10 is a schematic block diagram of a communication device provided in an embodiment of the present disclosure.
FIG. 11 is a schematic block diagram of a communication device provided in another embodiment of the present disclosure.
FIG. 12 is a schematic block diagram of a communication device provided in an embodiment of the present disclosure.
FIG. 13 is a schematic block diagram of a chip provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the embodiments of the disclosure. Instead, they are merely examples of apparatuses and methods consistent with some aspects of the embodiments of the disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" or "in a case where" may be construed to mean "when" or "upon" or "in response to determining" depending on the context.

Reference will be made in detail to the embodiments of the present disclosure, examples of which are shown in the drawings. The same or similar elements are denoted by the same or similar reference numerals throughout the descriptions. The embodiments described herein with reference to the drawings are illustrative, and used to explain the present disclosure. The embodiments shall not be construed to limit the present disclosure.

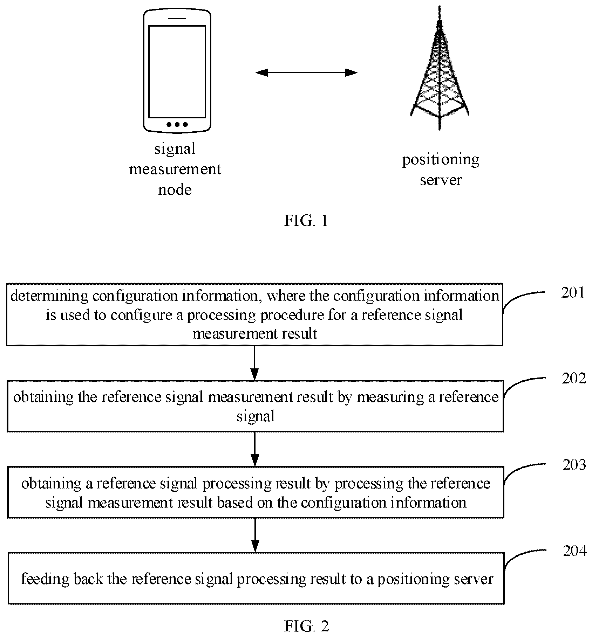

Reference is made to FIG. 1, which is a schematic diagram of the architecture of a communication system provided in an embodiment of the present disclosure. The communication system may include, but is not limited to, a signal measurement node and a positioning server, where the signal measurement node and the positioning server are different devices, the signal measurement node may be a terminal or a network device, and the positioning server may be a network device. Optionally, the number and form of devices shown in FIG. 1 are used as examples only, but do not constitute a limitation on the embodiments of the present disclosure. In actual applications, one or more signal measurement nodes or one or more positioning servers may be included. Optionally, the communication system shown in FIG. 1 includes, for example, one signal measurement node, which is a terminal; and one positioning server, which is a network device.

It should be noted that the technical solution in this embodiment of the present disclosure may be applied to various communication systems, such as a long term evolution (LTE) system, a 5th generation (5G) mobile communication system, a 5G new radio (NR) system, or other new future mobile communication systems.

The terminal in the embodiments of the present disclosure may be an entity on the user side for receiving or transmitting signals, such as a mobile phone. The terminal may also be called a terminal device, a user equipment (UE), a mobile station (MS), a mobile terminal (MT), etc. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or the like. The specific technology and specific device form adopted by the terminal are not limited in the embodiments of the present disclosure.

The network device in the embodiments of the present disclosure may be an entity on the network side for transmitting or receiving signals. For example, the network device may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the network device are not limited in the embodiments of the present disclosure. A master node (MN) or a secondary node (SN) provided in an embodiment of the present disclosure may be composed of a central unit (CU) and a distributed unit (DU), in which the CU may also be referred to as a control unit. The CU-DU structure may be used to split the protocol layer of the network device, such as the base station, and the functions of some protocol layers are placed in the CU for centralized control, and the functions of some or all of the remaining protocol layers are distributed in the DU, and the DU is centrally controlled by the CU.

It may be understood that the communication system described in this embodiment of the present disclosure is for the purpose of more clearly illustrating the technical solution of the embodiments of the present disclosure, but does not constitute a limitation on the technical solution provided in the embodiments of the present disclosure. Those of ordinary skill in the art may know that with the evolution of the system architecture and the emergence of new business scenarios, the technical solution provided in this embodiment of the present disclosure is also applicable to similar technical problems.

The feedback method, apparatus, device and storage medium provided in the embodiments of the present disclosure are described in detail below with reference to the accompanying drawings.

It should be noted that in the present disclosure, the feedback method provided in any embodiment may be executed alone, and any implementation in an embodiment may also be executed alone, or executed together with other embodiments or possible implementations in other embodiments, and may also be executed together with any technical solution in the related technology.

FIG. 2 is a flow chart of a feedback method provided in an embodiment of the present disclosure. The method is performed by a signal measurement node. As shown in FIG. 2, the feedback method may include the following steps.

At step 201, configuration information is determined, where the configuration information is used to configure a processing procedure for a reference signal measurement result.

In an embodiment of the present disclosure, the method in the present disclosure may be applied to an AI positioning process.

Optionally, in an embodiment of the present disclosure, the above-mentioned reference signal measurement result may be obtained by the signal measurement node by measuring a reference signal it receives, and the reference signal may be a positioning reference signal (PRS) or a sounding reference signal (SRS).

Optionally, in an embodiment of the present disclosure, the configuration information may also be used to configure the type of the reference signal measurement result required for the positioning. Optionally, the type of the reference signal measurement result required for the positioning may include at least one of: a channel impulse response corresponding to the reference signal, or a power distribution corresponding to the reference signal.

Therefore, when the signal measurement node measures the reference signal it receives, it may measure the reference signal measurement result required for the positioning based on the configuration information.

Optionally, in an embodiment of the present disclosure, the manner for determining the configuration information may include at least one of: receiving the configuration information sent by the positioning server, determining the configuration information based on a protocol agreement, determining the configuration information based on a pre-definition, or determining the configuration information based on a pre-configuration.

At step 202, the reference signal measurement result is obtained by measuring a reference signal.

Optionally, in an embodiment of the present disclosure, when the type of the reference signal measurement result required for the positioning is configured in the above-mentioned configuration information, in this step 202, the reference signal may be measured based on the type of the reference signal measurement result required for the positioning configured in the configuration information to obtain the reference signal measurement result required for the positioning.

For example, in an embodiment of the present disclosure, assuming that the type of the reference signal measurement result required for the positioning configured in the configuration information is the channel impulse response, the signal measurement node may measure the channel impulse response of the reference signal. At this time, the obtained reference signal measurement result may include the real and imaginary parts of the channel impulse response of the reference signal, where the real and imaginary parts of the channel impulse response may indicate the amplitude and/or phase of the reference signal.

For example, in another embodiment of the present disclosure, assuming that the type of the reference signal measurement result required for the positioning configured in the configuration information is the power distribution corresponding to the reference signal, the signal measurement node may measure the power of the reference signal. At this time, the obtained reference signal measurement result may include the power value of the reference signal.

At step 203, a reference signal processing result is obtained by processing the reference signal measurement result based on the configuration information.

Optionally, in an embodiment of the present disclosure, the reference signal processing result obtained in step 203 may include reference signal processing results at M time points, where *M* is a positive integer. The reference signal processing results at the *M* time points may include reference signal processing results obtained after processing the reference signal measurement results at each of the M time points respectively.

Optionally, the reference signal processing result may be a value obtained by quantizing the reference signal measurement result.

Based on the above content, in an embodiment of the present disclosure, the configuration information determined in the aforementioned step 201 may specifically be configured with a manner for selecting the M time points and/or a manner for quantizing the reference signal measurement result. Therefore, processing the reference signal measurement result based on the configuration information in step 203 may specifically include determining M time points based on the configuration information, and then quantizing reference signal measurement results at the M time points based on the configuration information to obtain the reference signal processing result.

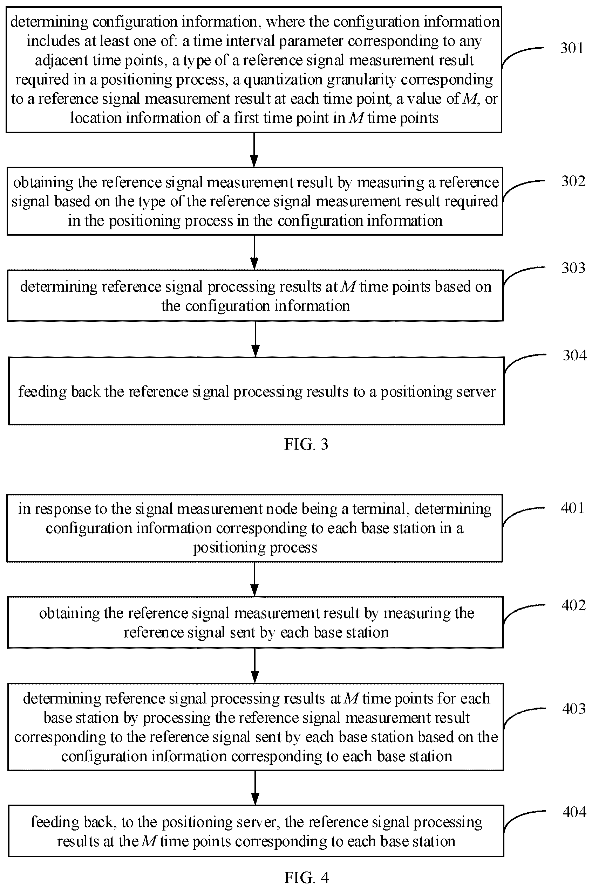

The specific contents of the configuration information and the manner for processing the reference signal measurement result based on the configuration information will be described in the subsequent embodiment of FIG. 3.

At step 204, the reference signal processing result is fed back to a positioning server.

Optionally, in an embodiment of the present disclosure, the reference signal processing result is fed back to the positioning server, so that the positioning server may determine the positioning location of the device to be positioned based on the reference signal processing result, thereby achieving accurate positioning. The device to be positioned may be the aforementioned signal measurement node, or the device to be positioned may also be a device that sends the reference signal.

In summary, in the feedback method provided in these embodiments of the present disclosure, the signal measurement node may determine configuration information, where the configuration information is used to configure a processing procedure for a reference signal measurement result; the signal measurement node may obtain the reference signal measurement result by measuring a reference signal; then the signal measurement node may obtain a reference signal processing result by processing the reference signal measurement result based on the configuration information; and thereafter the signal measurement node may feed back the reference signal processing result to the positioning server. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

FIG. 3 is a flow chart of a feedback method provided in an embodiment of the present disclosure. The method is performed by a signal measurement node. As shown in FIG. 3, the feedback method may include the following steps.

At step 301, configuration information is determined, where the configuration information may include at least one of: a time interval parameter corresponding to any adjacent time points, a type of a reference signal measurement result required in a positioning process, a quantization granularity corresponding to a reference signal measurement result at each time point, a value of *M,* or location information of a first time point in *M* time points.

Optionally, in an embodiment of the present disclosure, the above-mentioned any adjacent time points may be any adjacent time points in the aforementioned *M* time points, where the time intervals between different adjacent time points in the M time points may be the same or different. For example, a time interval between a first time point and a second time point may be the same as or different from a time interval between the second time point and a third time point.

Optionally, the above-mentioned time interval parameter may be used to determine the time interval between adjacent time points, and the time interval parameter may indicate that the time interval between the adjacent time points is a product of the time interval parameter and a basic time unit. In an embodiment of the present disclosure, the basic time unit may be obtained by any one of a protocol agreement, a configuration of the positioning server, or an autonomous determination by the signal measurement node.

For example, in an embodiment of the present disclosure, assuming that the basic time unit is *T*c as agreed in a protocol, and the time interval parameter included in the configuration information is *K,* then the interval between adjacent nodes is *K* × *T*c.

Optionally, in an embodiment of the present disclosure, the type of the reference signal measurement result required in the above positioning process may include at least one of: a channel impulse response corresponding to a reference signal, or a power distribution corresponding to a reference signal.

Optionally, in an embodiment of the present disclosure, the quantization granularity corresponding to the reference signal measurement results at the above-mentioned respective time points may be reflected by the interval length of a quantization interval. Optionally, each time point may correspond to at least one quantization interval, and each quantization interval may correspond to one quantization result. Based on the quantization interval and the quantization result, the quantization of the reference signal measurement result may be achieved. Specifically, when the reference signal measurement result belongs to a certain quantization interval, the quantized value corresponding to the reference signal measurement result (i.e., the reference signal processing result at this time point) is the quantization result corresponding to the quantization interval. Therefore, the quantization granularity corresponding to the reference signal measurement result is adjusted by flexibly configuring the interval length of the quantization interval. When the interval length of the quantization interval is longer, the quantization granularity is larger. When the interval length of the quantization interval is shorter, the quantization granularity is smaller.

For example, Table 1 is a correspondence table between quantization intervals and quantization results provided in an embodiment of the present disclosure.

**Table 1**

| Quantization Interval | Quantization Result |
|---|---|
| reference signal measurement result <X | 000 |
| X< reference signal measurement result <X+Y | 001 |
| X+Y< reference signal measurement result <X+2Y | 010 |
| X+2Y< reference signal measurement result <X+3Y | 011 |
| X+3Y< reference signal measurement result <X+4Y | 100 |
| .... | .... |

As shown in Table 1, the quantization granularity of the reference signal measurement result is Y. Moreover, assuming that the correspondence between the quantization interval and the quantization result corresponding to a certain time point is the correspondence shown in Table 1, then when the reference signal measurement result at this time point is greater than X+Y and less than X+2Y, it may be determined that the quantized value of the reference signal measurement result at this time point (that is, the reference signal processing result at this time point) is 010.

Optionally, in an embodiment of the present disclosure, the quantization granularities corresponding to different time points may be the same or different.

It may be understood that Table 1 only exemplarily shows the correspondence between quantization intervals and quantization results, and other possible quantization correspondences may also be used in actual operations. In addition, each element in Table 1 exists independently, and these elements are exemplarily listed in the same table, but it does not mean that all elements in this table must exist at the same time as shown in this table. The value of each element is independent of the value of any other element in Table 1. Therefore, those skilled in the art may understand that the value of each element in Table 1 is an independent embodiment.

In addition, for other detailed introductions about the configuration information (such as the manner for determining the configuration information, and the like), reference may be made to the description of the aforementioned embodiments.

At step 302, the reference signal measurement result is obtained by measuring a reference signal based on the type of the reference signal measurement result required in the positioning process in the configuration information.

For the detailed introduction about step 302, reference may be made to the description of step 202.

At step 303, reference signal processing results at *M* time points are determined based on the configuration information.

In an embodiment of the present disclosure, for example, the *M* time points may be determined based on at least one of: a time interval parameter corresponding to any adjacent time points, a value of *M,* or location information of a first time point in *M* time points in the configuration information. Then, reference signal measurement results at the *M* time points are quantized based on the quantization granularity corresponding to the reference signal measurement results at the respective time points in the configuration information to determine the reference signal processing results at the *M* time points.

At step 304, the reference signal processing results are fed back to the positioning server.

Optionally, in an embodiment of the present disclosure, the reference signal processing results are fed back to the positioning server, so that the positioning server may determine the positioning location of the device to be positioned based on the reference signal processing results, thereby achieving accurate positioning. The device to be positioned may be the aforementioned signal measurement node, or the device to be positioned may also be a device that sends the reference signal.

In summary, in the feedback method provided in these embodiments of the present disclosure, the signal measurement node may determine configuration information, where the configuration information is used to configure a processing procedure for a reference signal measurement result; the signal measurement node may obtain the reference signal measurement result by measuring a reference signal; then the signal measurement node may obtain a reference signal processing result by processing the reference signal measurement result based on the configuration information; and thereafter the signal measurement node may feed back the reference signal processing result to the positioning server. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

FIG. 4 is a flow chart of a feedback method provided in an embodiment of the present disclosure. The method is performed by a signal measurement node. As shown in FIG. 4, the feedback method may include the following steps.

At step 401, in response to the signal measurement node being a terminal, configuration information corresponding to each base station in a positioning process is determined.

Optionally, in an embodiment of the present disclosure, a terminal and multiple base stations usually participate in the positioning process, such as an AI positioning process. The device to be positioned may be a terminal or any base station among the multiple base stations, and the signal measurement node may be a terminal or each base station. Optionally, when the signal measurement node is a terminal, each base station may send a reference signal (such as a PRS) to the terminal, so that the terminal measures the reference signal sent by each base station.

Optionally, in an embodiment of the present disclosure, when the signal measurement node is a terminal, the terminal may determine configuration information corresponding to each base station, and the configuration information is used to configure a processing procedure corresponding to the reference signal measurement result corresponding to the reference signal sent by the base station. The terminal may subsequently process the reference signal measurement result corresponding to the reference signal sent by each base station based on the configuration information corresponding to each base station.

For example, assuming that when the signal measurement node is a terminal, base stations participating in the positioning are base station #1, base station #2, and base station #3, respectively, then the terminal may determine configuration information #1 corresponding to base station #1, configuration information #2 corresponding to base station #2, and configuration information #3 corresponding to base station #3. The configuration information #1 is used to configure a processing procedure corresponding to the reference signal measurement result corresponding to the reference signal sent by base station #1, the configuration information #2 is used to configure a processing procedure corresponding to the reference signal measurement result corresponding to the reference signal sent by base station #2, and the configuration information #3 is used to configure a processing procedure corresponding to the reference signal measurement result corresponding to the reference signal sent by base station #3.

Optionally, in an embodiment of the present disclosure, the configuration information corresponding to different base stations may be the same or different, for example, the values of *M* in the configuration information corresponding to different base stations may be the same or different, or the time interval parameters in the configuration information corresponding to different base stations may be the same or different, or the quantization granularities in the configuration information corresponding to different base stations may be the same or different.

In addition, for other introductions about the configuration information, reference may be made to the description of the aforementioned embodiment.

At step 402, the reference signal measurement result is obtained by measuring a reference signal sent by each base station.

At step 403, reference signal processing results at *M* time points are determined for each base station by processing the reference signal measurement result corresponding to the reference signal sent by each base station based on the configuration information corresponding to each base station.

For example, assuming that base stations participating in the positioning are base station #1, base station #2, and base station #3, base station #1 corresponds to configuration information #1, base station #2 corresponds to configuration information #2, and base station #3 corresponds to configuration information #3, then the terminal may process the reference signal measurement result corresponding to the reference signal sent by base station #1 based on configuration information #1, process the reference signal measurement result corresponding to the reference signal sent by base station #2 based on configuration information #2, and process the reference signal measurement result corresponding to the reference signal sent by base station #3 based on configuration information #3.

For the detailed introductions about how to measure the reference signal and how to determine the reference signal processing result in steps 402 to 404, reference may be made to the description in the aforementioned embodiment.

At step 404, the reference signal processing results at the *M* time points corresponding to each base station are fed back to the positioning server.

Optionally, in an embodiment of the present disclosure, the above-mentioned reference signal processing results at the *M* time points corresponding to each base station may be understood as reference signal processing results respectively corresponding to the reference signal measurement results of the reference signal sent by each base station at the *M* time points.

Furthermore, in an embodiment of the present disclosure, by feeding back the reference signal processing results at the *M* time points corresponding to each base station to the positioning server, the positioning server may determine the positioning location of the device to be positioned based on the reference signal processing results at the *M* time points corresponding to each base station, thereby achieving accurate positioning. The device to be positioned may be the aforementioned terminal serving as the signal measurement node, or the device to be positioned may also be any base station.

In summary, in the feedback method provided in these embodiments of the present disclosure, the signal measurement node may determine configuration information, where the configuration information is used to configure a processing procedure for a reference signal measurement result; the signal measurement node may obtain the reference signal measurement result by measuring a reference signal; then the signal measurement node may obtain a reference signal processing result by processing the reference signal measurement result based on the configuration information; and thereafter the signal measurement node may feed back the reference signal processing result to the positioning server. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

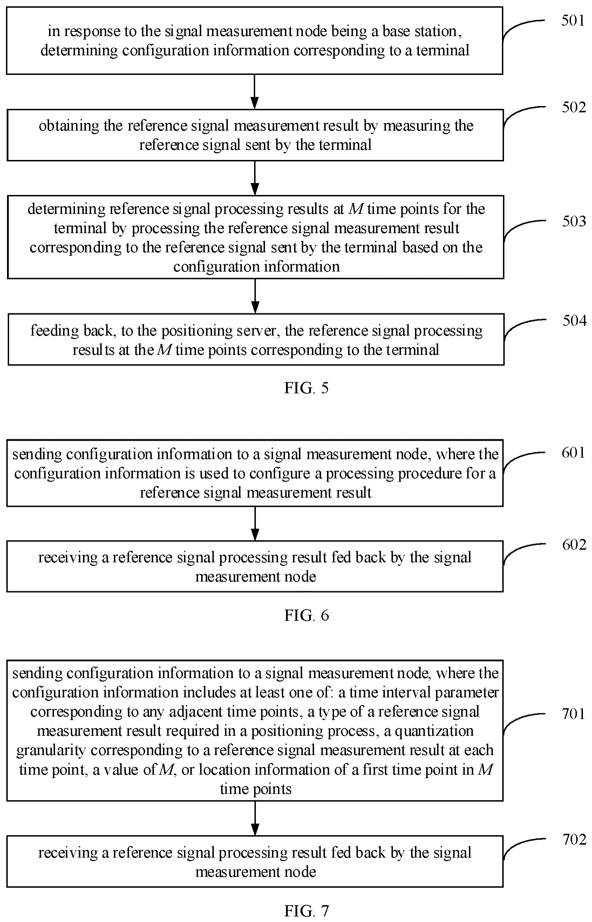

FIG. 5 is a flow chart of a feedback method provided in an embodiment of the present disclosure. The method is performed by a signal measurement node. As shown in FIG. 5, the feedback method may include the following steps.

At step 501, in response to the signal measurement node being a base station, configuration information corresponding to a terminal is determined.

Optionally, in an embodiment of the present disclosure, a terminal and multiple base stations usually participate in the positioning process, such as an AI positioning process. The device to be positioned may be a terminal or any base station among the multiple base stations, and the signal measurement node may be a terminal or each base station. Optionally, when the signal measurement node is a base station, a terminal may send a reference signal (such as an SRS) to each base station, so that each base station measures the reference signal sent by the terminal.

Optionally, in an embodiment of the present disclosure, when the signal measurement node is a base station, the base station may determine configuration information corresponding to a terminal, and the configuration information is used to configure a processing procedure corresponding to the reference signal measurement result corresponding to the reference signal sent by the terminal. The base station may subsequently process the reference signal measurement result corresponding to the reference signal sent by the terminal based on the configuration information.

In addition, for other introductions about the configuration information, reference may be made to the description of the aforementioned embodiments.

At step 502, the reference signal measurement result is obtained by measuring a reference signal sent by the terminal.

At step 503, reference signal processing results at *M* time points are determined for the terminal by processing the reference signal measurement result corresponding to the reference signal sent by the terminal based on the configuration information.

At step 504, the reference signal processing results at the *M* time points corresponding to the terminal are fed back to the positioning server.

Optionally, in an embodiment of the present disclosure, the above-mentioned reference signal processing results at the *M* time points corresponding to the terminal may be understood as reference signal processing results respectively corresponding to the reference signal measurement results of the reference signal sent by the terminal at the *M* time points.

Furthermore, in an embodiment of the present disclosure, each base station participating in the positioning may feed back the reference signal processing results at the *M* time points corresponding to the terminal to the positioning server, so that the positioning server may determine the positioning location of the device to be positioned based on the reference signal processing results at the *M* time points corresponding to the terminal sent by each base station, thereby achieving accurate positioning. The device to be positioned may be any base station participating in the positioning mentioned above, or the device to be positioned may also be a terminal.

In summary, in the feedback method provided in these embodiments of the present disclosure, the signal measurement node may determine configuration information, where the configuration information is used to configure a processing procedure for a reference signal measurement result; the signal measurement node may obtain the reference signal measurement result by measuring a reference signal; then the signal measurement node may obtain a reference signal processing result by processing the reference signal measurement result based on the configuration information; and thereafter the signal measurement node may feed back the reference signal processing result to the positioning server. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

FIG. 6 is a flow chart of a feedback method provided in an embodiment of the present disclosure. The method is performed by a positioning server. As shown in FIG. 6, the feedback method may include the following steps.

At step 601, configuration information is sent to a signal measurement node, where the configuration information is used to configure a processing procedure for a reference signal measurement result.

At step 602, a reference signal processing result fed back by the signal measurement node is received.

For the detailed introductions about steps 601 to 602, reference may be made to the description of the aforementioned embodiments.

In summary, in the feedback method provided in this embodiment of the present disclosure, the positioning server may send configuration information to a signal measurement node, where the configuration information is used to configure a processing procedure for a reference signal measurement result; and the positioning server may also receive a reference signal processing result fed back by the signal measurement node, so that the positioning server may determine the positioning location of the device to be positioned based on the reference signal processing result. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

FIG. 7 is a flow chart of a feedback method provided in an embodiment of the present disclosure. The method is performed by a positioning server. As shown in FIG. 7, the feedback method may include the following steps.

At step 701, configuration information is sent to a signal measurement node, where the configuration information includes at least one of: a time interval parameter corresponding to any adjacent time points, a type of a reference signal measurement result required in a positioning process, a quantization granularity corresponding to a reference signal measurement result at each time point, a value of *M,* or location information of a first time point in *M* time points.

At step 702, a reference signal processing result fed back by the signal measurement node is received.

For the detailed introductions about steps 701 to 702, reference may be made to the description of the aforementioned embodiments.

In summary, in the feedback method provided in this embodiment of the present disclosure, the positioning server may send configuration information to a signal measurement node, where the configuration information is used to configure a processing procedure for a reference signal measurement result; and the positioning server may also receive a reference signal processing result fed back by the signal measurement node, so that the positioning server may determine the positioning location of the device to be positioned based on the reference signal processing result. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

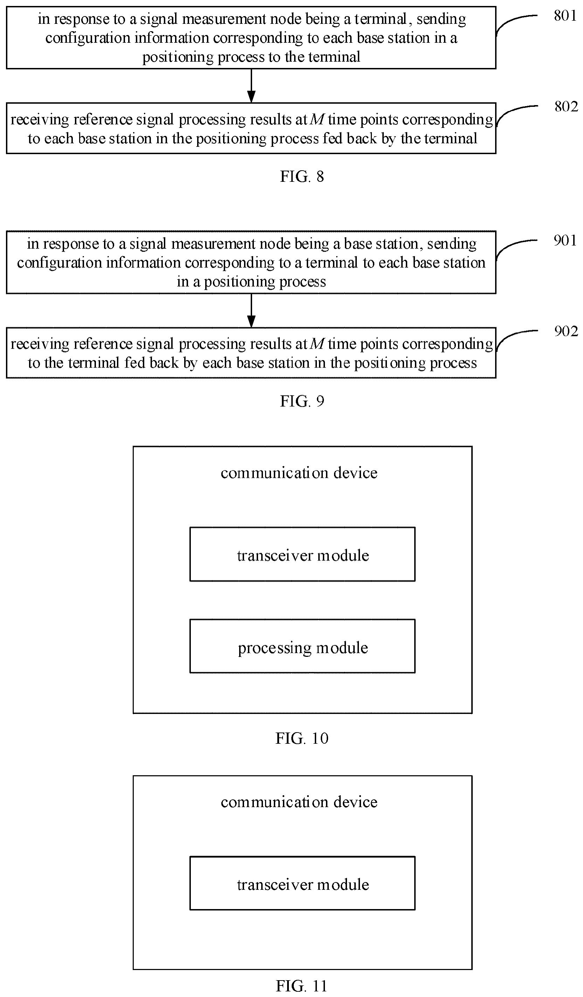

FIG. 8 is a flow chart of a feedback method provided in an embodiment of the present disclosure. The method is performed by a positioning server. As shown in FIG. 8, the feedback method may include the following steps.

At step 801, in response to a signal measurement node being a terminal, configuration information corresponding to each base station in a positioning process is sent to the terminal.

Optionally, the configuration information is used to configure a processing procedure corresponding to a reference signal measurement result corresponding to a reference signal sent by a base station, and the configuration information corresponding to different base stations is the same or different.

At step 802, reference signal processing results at *M* time points corresponding to each base station in the positioning process fed back by the terminal are received.

For the detailed introductions about steps 801 to 802, reference may be made to the description of the aforementioned embodiments.

In summary, in the feedback method provided in this embodiment of the present disclosure, the positioning server may send configuration information to a signal measurement node, where the configuration information is used to configure a processing procedure for a reference signal measurement result; and the positioning server may also receive a reference signal processing result fed back by the signal measurement node, so that the positioning server may determine the positioning location of the device to be positioned based on the reference signal processing result. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

FIG. 9 is a flow chart of a feedback method provided in an embodiment of the present disclosure. The method is performed by a positioning server. As shown in FIG. 9, the feedback method may include the following steps.

At step 901, in response to a signal measurement node being a base station, configuration information corresponding to a terminal is sent to each base station in a positioning process.

Optionally, the configuration information is used to configure a processing procedure corresponding to a reference signal measurement result corresponding to a reference signal sent by the terminal.

At step 902, reference signal processing results at *M* time points corresponding to the terminal fed back by each base station in the positioning process are received.

For the detailed introductions about steps 901 to 902, reference may be made to the description of the aforementioned embodiments.

In summary, in the feedback method provided in this embodiment of the present disclosure, the positioning server may send configuration information to a signal measurement node, where the configuration information is used to configure a processing procedure for a reference signal measurement result; and the positioning server may also receive a reference signal processing result fed back by the signal measurement node, so that the positioning server may determine the positioning location of the device to be positioned based on the reference signal processing result. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

An example introduction to the method in the present disclosure is as follows.
(1) A method for feeding back positioning measurement results is applied to a positioning signal measurement node to measure a reference signal used for a positioning and feed back the measurement result to a positioning server, where the measurement result includes any one of amplitude, power, or phase information at *M* time points.

For example, if the measurement result fed back is a channel impulse response, then the channel impulse response includes real and imaginary parts of a signal at multiple time sampling points. If the measurement result fed back is a power distribution, then the power distribution includes power values of a signal at multiple time sampling points.

(2) Based on (1), configuration information of the positioning server is received, the configuration information at least including a time interval determination parameter between two adjacent nodes at the M time points.

Specifically, for example, a basic time unit for determining time interval parameters is stipulated in a protocol, and the interval time between two adjacent time nodes may be determined based on the time interval determination parameter and the basic time unit. For example, assuming that the basic time unit is *T*c*,* and the configuration information includes the coefficient *K,* then the interval between adjacent nodes is *K* × *T*c.

(3) Based on (1), a configuration message from the positioning server is received, where the configuration message includes at least the type of a measurement result to be fed back, for example, whether a channel impulse response or a power distribution needs to be fed back is configured in the configuration information.

(4) Based on (1), the measurement result is a quantized result. A quantized example is as follows.

| Measurement Result Range (s) | Quantized Result |
|---|---|
| s<X | 000 |
| X<s<X+Y | 001 |
| X+Y<s<X+2Y | 010 |
| X+2Y<s<X+3Y | 011 |
| X+3Y<s<X+4Y | 100 |
| ... | ... |

(5) Based on (4), a configuration message from the positioning server is received, where the configuration message includes a quantization granularity of the measurement result.

(6) Based on (1), a configuration message from the positioning server is received, where the configuration message includes a configuration for *M.*

(7) Based on (1), in response to the positioning signal measurement node being a terminal, the measurement result includes measurement results of positioning signals from N base stations, and the measurement result for each base station includes any one of amplitude, power, or phase information at *M*ⱼ time points, where j is the serial number of the base station.

(8) Based on (7) and (6), different *M* values may be configured for different base stations.

(12) Based on (1), in response to the positioning signal measurement node being a base station, the base station only feeds back the measurement value of the positioning reference signal measured by the base station.

The corresponding side is the positioning server side, and the corresponding action is to receive the measurement result and send the corresponding configuration information.

FIG. 10 is a schematic block diagram of a communication device provided in an embodiment of the present disclosure. As shown in FIG. 10, the communication device includes a processing module and a transceiver module. The processing module is configured to determine configuration information, where the configuration information is used to configure a processing procedure for a reference signal measurement result. The processing module is further configured to obtain the reference signal measurement result by measuring a reference signal, and obtain a reference signal processing result by processing the reference signal measurement result based on the configuration information. The transceiver module is configured to feed back the reference signal processing result to a positioning server.

In summary, in the communication device provided in this embodiment of the present disclosure, the signal measurement node may determine configuration information, where the configuration information is used to configure a processing procedure for a reference signal measurement result; the signal measurement node may obtain the reference signal measurement result by measuring a reference signal; then the signal measurement node may obtain a reference signal processing result by processing the reference signal measurement result based on the configuration information; and thereafter the signal measurement node may feed back the reference signal processing result to the positioning server. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

Optionally, in an embodiment of the present disclosure, the reference signal measurement result includes reference signal measurement results at *M* time points, and *M* is a positive integer.

Optionally, in an embodiment of the present disclosure, the reference signal processing result is a value obtained after quantizing the reference signal measurement result.

Optionally, in an embodiment of the present disclosure, the configuration information includes at least one of: a time interval parameter corresponding to any adjacent time points, where the time interval parameter is used to determine a time interval between adjacent time points; a type of the reference signal measurement result required in a positioning process; a quantization granularity corresponding to the reference signal measurement result at each time point; a value of *M;* or location information of a first time point in *M* time points.

Optionally, in an embodiment of the present disclosure, time intervals between different adjacent time points in the *M* time points are identical or different.

Optionally, in an embodiment of the present disclosure, the time interval parameter indicates that the time interval between the adjacent time points is a product of the time interval parameter and a basic time unit, where the basic time unit is obtained by any one of a protocol agreement, a configuration of the positioning server, or an autonomous determination by the signal measurement node.

Optionally, in an embodiment of the present disclosure, the type of the reference signal measurement result required in the positioning process includes at least one of: a channel impulse response corresponding to the reference signal, or a power distribution corresponding to the reference signal.

Optionally, in an embodiment of the present disclosure, quantization granularities corresponding to different time points are identical or different.

Optionally, in an embodiment of the present disclosure, the processing module is further configured to perform at least one of: receiving the configuration information sent by the positioning server, determining the configuration information based on a protocol agreement, or determining the configuration information based on a pre-definition.

Optionally, in an embodiment of the present disclosure, the processing module is further configured to obtain the reference signal measurement result by measuring the reference signal based on a type of the reference signal measurement result required in a positioning process in the configuration information.

Optionally, in an embodiment of the present disclosure, in response to the signal measurement node being a terminal, the processing module is further configured to determine the configuration information corresponding to each base station in a positioning process, where the configuration information is used to configure a processing procedure corresponding to the reference signal measurement result corresponding to the reference signal sent by the base station; obtain the reference signal measurement result by measuring the reference signal sent by each base station; and determine reference signal processing results at *M* time points for each base station by processing the reference signal measurement result corresponding to the reference signal sent by each base station based on the configuration information corresponding to each base station; and the transceiver module is further configured to feed back, to the positioning server, the reference signal processing results at the *M* time points corresponding to each base station.

Optionally, in an embodiment of the present disclosure, the configuration information corresponding to different base stations is identical or different.

Optionally, in an embodiment of the present disclosure, in response to the signal measurement node being a base station, the processing module is further configured to determine the configuration information corresponding to a terminal, where the configuration information is used to configure a processing procedure corresponding to the reference signal measurement result corresponding to the reference signal sent by the terminal; obtain the reference signal measurement result by measuring the reference signal sent by the terminal; and determine reference signal processing results at *M* time points for the terminal by processing the reference signal measurement result corresponding to the reference signal sent by the terminal based on the configuration information; and the transceiver module is further configured to feed back, to the positioning server, the reference signal processing results at the *M* time points corresponding to the terminal.

FIG. 11 is a schematic block diagram of a communication device provided in an embodiment of the present disclosure. As shown in FIG. 11, the communication device includes a transceiver module configured to send configuration information to a signal measurement node, where the configuration information is used to configure a processing procedure for a reference signal measurement result. The transceiver module is further configured to receive a reference signal processing result fed back by the signal measurement node.

In summary, in the communication device provided in this embodiment of the present disclosure, the positioning server may send configuration information to a signal measurement node, where the configuration information is used to configure a processing procedure for a reference signal measurement result; and the positioning server may also receive a reference signal processing result fed back by the signal measurement node, so that the positioning server may determine the positioning location of the device to be positioned based on the reference signal processing result. It may be seen that the present disclosure provides a feedback method, in which the signal measurement node may feed back positioning-related information (i.e., the aforementioned reference signal processing result) to the positioning server based on the feedback method in the present disclosure, so that the positioning server may implement the positioning based on the positioning-related information. Moreover, the method in the present disclosure may be applied to an AI positioning process to realize the measurement feedback of a channel impulse response and/or a power distribution in the AI positioning process, thereby ensuring the stable execution of the AI positioning process.

Optionally, in an embodiment of the present disclosure, the reference signal processing result includes results obtained after processing reference signal measurement results at *M* time points, respectively, and *M* is a positive integer.

Optionally, in an embodiment of the present disclosure, the reference signal processing result is a value obtained after quantizing the reference signal measurement result.

Optionally, in an embodiment of the present disclosure, the configuration information includes at least one of: a time interval parameter corresponding to any adjacent time points, where the time interval parameter is used to determine a time interval between adjacent time points; a type of the reference signal measurement result required in a positioning process; a quantization granularity corresponding to an actual measurement value of a reference signal at each time point; a value of *M;* or location information of a first time point in *M* time points.

Optionally, in an embodiment of the present disclosure, time intervals between different adjacent time points in the *M* time points are identical or different.

Optionally, in an embodiment of the present disclosure, the time interval parameter indicates that the time interval between the adjacent time points is a product of the time interval parameter and a basic time unit, where the basic time unit is obtained by any one of a protocol agreement, a configuration of the positioning server, or an autonomous determination by the signal measurement node.

Optionally, in an embodiment of the present disclosure, the type of the reference signal measurement result required in the positioning process includes at least one of: a channel impulse response corresponding to the reference signal, or a power distribution corresponding to the reference signal.

Optionally, in an embodiment of the present disclosure, quantization granularities corresponding to different time points are identical or different.

Optionally, in an embodiment of the present disclosure, in response to the signal measurement node being a terminal, the transceiver module is further configured to send the configuration information corresponding to each base station in a positioning process to the terminal, where the configuration information corresponding to different base stations is identical or different, and the configuration information is used to configure a processing procedure corresponding to the reference signal measurement result corresponding to a reference signal sent by the base station; and receiving the reference signal processing result fed back by the signal measurement node includes: receiving reference signal processing results at *M* time points corresponding to each base station in the positioning process fed back by the terminal.

Optionally, in an embodiment of the present disclosure, in response to the signal measurement node being a base station, the transceiver module is further configured to send the configuration information corresponding to a terminal to each base station in a positioning process, where the configuration information is used to configure a processing procedure corresponding to the reference signal measurement result corresponding to a reference signal sent by the terminal; and receiving the reference signal processing result fed back by the signal measurement node includes: receiving reference signal processing results at *M* time points corresponding to the terminal fed back by each base station in the positioning process.

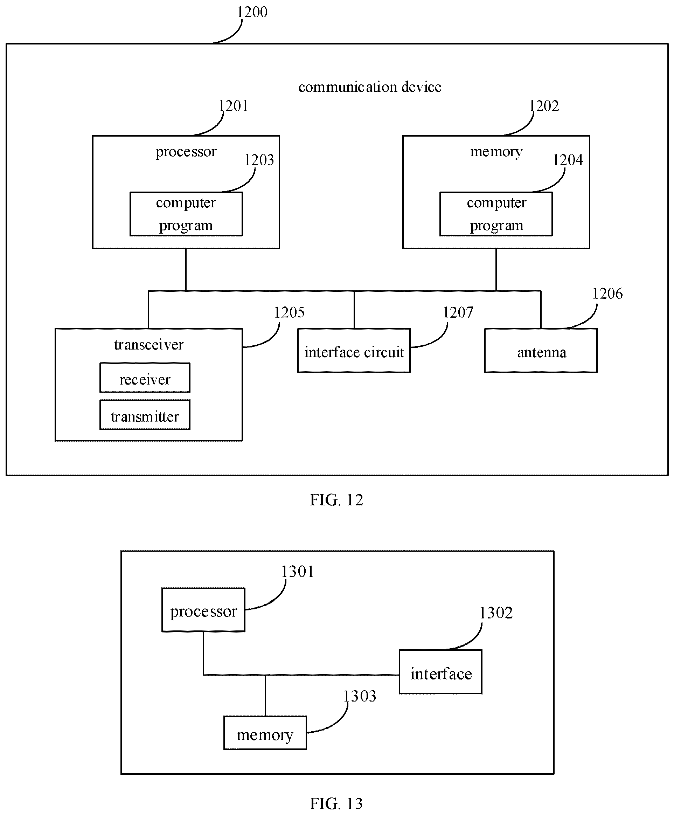

Reference is made to FIG. 12, which is a schematic block diagram of a communication device 1200 provided in an embodiment of the present disclosure. The communication device 1200 may be a network device or a terminal, or may be a chip, a chip system, a processor or the like supporting the network device or the terminal to implement the above-mentioned methods. The communication device 1200 may be configured to implement the methods as described in the above-mentioned method embodiments. For details, reference may be made to the description in the above-mentioned method embodiments.

The communication device 1200 may include one or more processors 1201. The processor 1201 may be a general-purpose processor, a special-purpose processor, or the like. The processor 1201 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 1200 may further include one or more memories 1202 on which a computer program 1204 may be stored, and the processor 1201 is configured to execute the computer program 1204 to cause the communication device 1200 to perform the methods as described in the above-mentioned method embodiments. Optionally, the memory 1202 may also have data stored therein. The communication device 1200 and the memory 1202 may be provided independently or integrated together.

Optionally, the communication device 1200 may further include a transceiver 1205 and an antenna 1206. The transceiver 1205 may be referred to as a transceiving unit, a transceiving device, a transceiving circuit or the like for implementing a transceiving function. The transceiver 1205 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 1200 may further include one or more interface circuits 1207. The interface circuit 1207 is configured to receive and transmit code instructions to the processor 1201. The processor 1201 is configured to run the code instructions to enable the communication device 1200 to perform the methods described in the above-mentioned method embodiments.

In an implementation, the processor 1201 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1201 may have stored therein the computer program 1203 that, when running on the processor 1201, enables the communication device 1200 to perform the methods described in the above-mentioned method embodiments. The computer program 1203 may be embedded in the processor 1201, in which case the processor 1201 may be implemented by hardware.

In an implementation, the communication device 1200 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a terminal, but the scope of the communication device described in the present disclosure is not limited thereto. The structure of the communication device may not be limited by FIG. 12. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

For the case where the communication device may be a chip or a chip system, reference may be made to the schematic block diagram of the chip shown in FIG. 13. The chip shown in FIG. 13 includes a processor 1301 and an interface 1302. The number of processors 1301 may be one or more, and the number of interfaces 1302 may be multiple.

Optionally, the chip further includes a memory 1303 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

The corresponding relationships shown in the tables in the present disclosure may be configured or predefined. The values of signals in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A feedback method, performed by a signal measurement node and comprising:
determining configuration information, wherein the configuration information is used to configure a processing procedure for a reference signal measurement result;
obtaining the reference signal measurement result by measuring a reference signal;
obtaining a reference signal processing result by processing the reference signal measurement result based on the configuration information; and
feeding back the reference signal processing result to a positioning server.

2. The feedback method according to claim 1, wherein the reference signal measurement result comprises reference signal measurement results at *M* time points, and *M* is a positive integer.

3. The feedback method according to claim 1 or 2, wherein the reference signal processing result is a value obtained after quantizing the reference signal measurement result.

4. The feedback method according to any one of claims 1 to 3, wherein the configuration information comprises at least one of:
a time interval parameter, wherein the time interval parameter is used to determine a time interval between adjacent time points;
a type of the reference signal measurement result required in a positioning process;
a quantization granularity corresponding to the reference signal measurement result at each time point;
a value of *M;* or
location information of a first time point in *M* time points.

5. The feedback method according to claim 4, wherein time intervals between different adjacent time points in the *M* time points are identical or different.

6. The feedback method according to claim 4, wherein the time interval parameter indicates that the time interval between the adjacent time points is a product of the time interval parameter and a basic time unit,
wherein the basic time unit is obtained by any one of a protocol agreement, a configuration of the positioning server, or an autonomous determination by the signal measurement node.

7. The feedback method according to claim 4, wherein the type of the reference signal measurement result required in the positioning process comprises at least one of:
a channel impulse response corresponding to the reference signal; or
a power distribution corresponding to the reference signal.

8. The feedback method according to claim 4, wherein quantization granularities corresponding to different time points are identical or different.

9. The feedback method according to any one of claims 1 to 8, wherein determining the configuration information comprises at least one of:
receiving the configuration information sent by the positioning server;
determining the configuration information based on a protocol agreement; or
determining the configuration information based on a pre-definition.

10. The feedback method according to claim 4, wherein obtaining the reference signal measurement result by measuring the reference signal comprises:
obtaining the reference signal measurement result by measuring the reference signal based on the configuration information.

11. The feedback method according to any one of claims 1 to 8, wherein, in response to the signal measurement node being a terminal, determining the configuration information comprises:
determining the configuration information corresponding to each base station in a positioning process, wherein the configuration information is used to configure a processing procedure corresponding to the reference signal measurement result corresponding to the reference signal sent by the base station;
obtaining the reference signal measurement result by measuring the reference signal comprises:
obtaining the reference signal measurement result by measuring the reference signal sent by each base station;
obtaining the reference signal processing result by processing the reference signal measurement result based on the configuration information comprises:
determining reference signal processing results at *M* time points for each base station by processing the reference signal measurement result corresponding to the reference signal sent by each base station based on the configuration information corresponding to each base station;
feeding back the reference signal processing result to the positioning server comprises:
feeding back, to the positioning server, the reference signal processing results at the *M* time points corresponding to each base station.

12. The feedback method according to claim 11, wherein the configuration information corresponding to different base stations is identical or different.

13. The feedback method according to any one of claims 1 to 8, wherein, in response to the signal measurement node being a base station, determining the configuration information comprises:
determining the configuration information corresponding to a terminal, wherein the configuration information is used to configure a processing procedure corresponding to the reference signal measurement result corresponding to the reference signal sent by the terminal;
obtaining the reference signal measurement result by measuring the reference signal comprises:
obtaining the reference signal measurement result by measuring the reference signal sent by the terminal;
obtaining the reference signal processing result by processing the reference signal measurement result based on the configuration information comprises:
determining reference signal processing results at *M* time points for the terminal by processing the reference signal measurement result corresponding to the reference signal sent by the terminal based on the configuration information;
feeding back the reference signal processing result to the positioning server comprises:
feeding back, to the positioning server, the reference signal processing results at the *M* time points corresponding to the terminal.

14. A feedback method, performed by a positioning server and comprising:
sending configuration information to a signal measurement node, wherein the configuration information is used to configure a processing procedure for a reference signal measurement result; and
receiving a reference signal processing result fed back by the signal measurement node.

15. The feedback method according to claim 14, wherein the reference signal processing result comprises results obtained after processing reference signal measurement results at *M* time points, respectively, and *M* is a positive integer.

16. The feedback method according to claim 14 or 15, wherein the reference signal processing result is a value obtained after quantizing the reference signal measurement result.

17. The feedback method according to any one of claims 14 to 16, wherein the configuration information comprises at least one of:
a time interval parameter, wherein the time interval parameter is used to determine a time interval between adjacent time points;
a type of the reference signal measurement result required in a positioning process;
a quantization granularity corresponding to an actual measurement value of a reference signal at each time point;
a value of *M;* or
location information of a first time point in *M* time points.

18. The feedback method according to claim 17, wherein time intervals between different adjacent time points in the *M* time points are identical or different.

19. The feedback method according to claim 17, wherein the time interval parameter indicates that the time interval between the adjacent time points is a product of the time interval parameter and a basic time unit,
wherein the basic time unit is obtained by any one of a protocol agreement, a configuration of the positioning server, or an autonomous determination by the signal measurement node.

20. The feedback method according to claim 17, wherein the type of the reference signal measurement result required in the positioning process comprises at least one of:
a channel impulse response corresponding to the reference signal; or
a power distribution corresponding to the reference signal.

21. The feedback method according to claim 17, wherein quantization granularities corresponding to different time points are identical or different.

22. The feedback method according to any one of claims 14 to 21, wherein, in response to the signal measurement node being a terminal, sending the configuration information to the signal measurement node comprises:
sending the configuration information corresponding to each base station in a positioning process to the terminal, wherein the configuration information corresponding to different base stations is identical or different, and the configuration information is used to configure a processing procedure corresponding to the reference signal measurement result corresponding to a reference signal sent by the base station;
receiving the reference signal processing result fed back by the signal measurement node comprises:
receiving reference signal processing results at *M* time points corresponding to each base station in the positioning process fed back by the terminal.

23. The feedback method according to any one of claims 14 to 21, wherein, in response to the signal measurement node being a base station, sending the configuration information to the signal measurement node comprises:
sending the configuration information corresponding to a terminal to each base station in a positioning process, wherein the configuration information is used to configure a processing procedure corresponding to the reference signal measurement result corresponding to a reference signal sent by the terminal;
receiving the reference signal processing result fed back by the signal measurement node comprises:
receiving reference signal processing results at *M* time points corresponding to the terminal fed back by each base station in the positioning process.

24. A communication device, comprising:
a processing module configured to determine configuration information, wherein the configuration information is used to configure a processing procedure for a reference signal measurement result, and the processing module is further configured to obtain the reference signal measurement result by measuring a reference signal, and obtain a reference signal processing result by processing the reference signal measurement result based on the configuration information; and
a transceiver module configured to feed back the reference signal processing result to a positioning server.

25. A communication device, comprising:
a transceiver module configured to send configuration information to a signal measurement node, wherein the configuration information is used to configure a processing procedure for a reference signal measurement result,
wherein the transceiver module is further configured to receive a reference signal processing result fed back by the signal measurement node.

26. A communication device, comprising:
a processor; and
a memory having stored therein a computer program,
wherein the processor executes the computer program stored in the memory, so that the communication device performs the feedback method according to any one of claims 1 to 13 or any one of claims 14 to 23.

27. A communication device, comprising:
a processor; and
an interface circuit configured to receive code instructions and transmit the code instructions to the processor,
wherein the processor is configured to run the code instructions to perform the feedback method according to any one of claims 1 to 13 or any one of claims 14 to 23.

28. A computer-readable storage medium for storing instructions that, when executed, cause the feedback method according to any one of claims 1 to 13 or any one of claims 14 to 23 to be implemented.
